Europäisches Patentamt

European Patent Office

Office européen des brevets

(19)

(11) **EP 0 965 090 B1**

(12) **EUROPÄISCHE PATENTSCHRIFT**

(45) Veröffentlichungstag und Bekanntmachung des Hinweises auf die Patenterteilung:
**23.05.2001 Patentblatt 2001/21**

(21) Anmeldenummer: **98914875.4**

(22) Anmeldetag: **06.03.1998**

(51) Int Cl.$^7$: **G06F 17/30**

(86) Internationale Anmeldenummer:
**PCT/EP98/01330**

(87) Internationale Veröffentlichungsnummer:
**WO 98/39712 (11.09.1998 Gazette 1998/36)**

(54) **DATENBANKSYSTEM UND VERFAHREN ZUM BETRIEB EINES DATENBANKSYSTEMS**

DATABASE SYSTEM AND METHOD FOR OPERATING A DATABASE SYSTEM

SYSTEME DE BANQUE DE DONNEES ET PROCEDE D'EXPLOITATION D'UN TEL SYSTEME

(84) Benannte Vertragsstaaten:
**AT CH DE ES FR GB IT LI**

(30) Priorität: **06.03.1997 DE 19709041**

(43) Veröffentlichungstag der Anmeldung:
**22.12.1999 Patentblatt 1999/51**

(73) Patentinhaber: **Bayer, Rudolf
82194 Gröbenzell (DE)**

(72) Erfinder: **Bayer, Rudolf
82194 Gröbenzell (DE)**

(74) Vertreter: **Hössle, Markus, Dipl.-Phys.
Hössle & Kudlek
Patentanwälte
Diemershaldenstrasse 23
70184 Stuttgart (DE)**

(56) Entgegenhaltungen:
**EP-A- 0 306 197          WO-A-95/02222
DE-A- 3 908 684          US-A- 4 468 728**

• **"ADAPTIVE JOIN ALGORITHM" IBM
TECHNICAL DISCLOSURE BULLETIN, Bd. 33,
Nr. 1B, 1.Juni 1990, Seiten 243-247,
XP000122877**

**Beschreibung**

Die Erfindung betrifft ein Datenbanksystem mit einer Recheneinrichtung, einem Arbeitsspeicher und einer insbesondere peripheren Speichereinrichtung, in der mindestens ein mehrdimensionaler Datenbestand als UB-Baum abgespeichert ist, sowie ein Verfahren zum Betrieb eines Datenbanksystems dieser Art zum Lesen von Daten sowie zum Durchführen von Verbundoperationen und weiterer Operationen der relationalen Algebra. Darüber hinaus betrifft die Erfindung ein Computerprogramm mit Programmcodemitteln, das beim Betrieb auf einem Computer bzw. einer Recheneinrichtung zur Durchführung eines gattungsgemäßen Verfahrens geeignet ist.

Datenbanksysteme zur Beschreibung, Speicherung und Wiedergewinnung von umfangreichen Datenbeständen sind bekannt. Ein Datenbanksystem umfaßt üblicherweise eine insbesondere periphere Speichereinrichtung (Datenbasis), in welcher der oder die Datenbestände abgelegt werden, und einer Datenverwaltung, welche die Daten entsprechend vorgegebenen Beschreibungen abspeichert, auffindet oder weitere Operationen mit den Daten durchführt.

Häufig durchgeführte Operationen, insbesondere im Bereich relationaler Datenbanken, sind die sogenannten Verbund- oder Joinoperationen, in welchen mindestens zwei Relationen genannte Datenbestände attributsorientiert verbunden werden. Die meisten in Datenbanken durchgeführten einstelligen und zweistelligen Operationen erfordern ein Vorliegen des oder der Operanden in Sortierordnung nach bestimmten Attributen. In den bekannten Datenbanken müssen abgespeicherte Datenbestände aus diesem Grund sehr häufig sortiert werden, wobei die Daten mehrfach zwischen dem Arbeitsspeicher des Rechners und der Festplatte oder peripheren Speichereinrichtung hin- und hertransportiert werden müssen. Insbesondere bei mehrdimensionalen Datenbeständen sind hiermit speicherkapazitäts- und rechenzeitaufwendige Speicher- und Sortiervorgänge verbunden.

Aus der WO 95/02222 A1 ist die Unterteilung eines mehrdimensionalen, als verallgemeinerter B-Baum abgespeicherten Datenbestands in Unterräume oder Regionen bekannt. Mit der bekannten Struktur soll eine Verallgemeinerung der Eigenschaften des B-Baums auf n-Dimensionen erreicht werden, wobei sich jedoch als nachteilig auswirkt, daß die bekannte Struktur auf einem sehr komplizierten hierarchischen Aufteilungsschema beruht und Regionen, die nicht in diese Hierarchie passen, auf höhere Ebenen des Baumes gehoben werden müssen, was zu einer Unausgeglichenheit der Pfadlängen führt.

Ausgehend von diesem Stand der Technik liegt der Erfindung die Aufgabe zugrunde, ein Datenbanksystem sowie ein Verfahren zum Betrieb eines Datenbanksystems bereitzustellen, das ein Lesen, Bereitstellen und Verbinden von Datenbeständen in beliebiger Sortierreihenfolge bei möglichst geringer Speicherkapazität und Rechenzeit gestattet.

Zur Lösung dieser Aufgabe wird erfindungsgemäß ein Datenbanksystem mit den Merkmalen des Anspruchs 1 vorgeschlagen. Durch die Abspeicherung des mehrdimensionalen Datenbestands als UB-Baum (universaler B-Baum) und die Unterteilung des UB-Baums in eine vorgegebene Anzahl von Unterräumen und ein sukzessives Abarbeiten der Unterräume wird erfindungsgemäß eine Umsortierung bezüglich eines Anfrageattributs vermieden.

Das Organisieren und Abspeichern eines mehrdimensionalen Datenbestands als UB-Baum zur Erzielung verbesserter Zugriffszeiten insbesondere bei Online-Anwendungen mit der Möglichkeit eines dynamischen Einfügens und Löschens von Datenobjekten ist aus der deutschen Patentanmeldung Nr. 196 35 429.3 desselben Anmelders sowie aus: "The Universal B-Tree for Multidimensional Indexing" von Rudolf Bayer, Technische Universität München, Institut für Informatik, TUM-19637, November 1996, bekannt. Die Indizierung und Speicherung eines mehrdimensionalen Datenbestands erfolgt dabei durch Abgrenzung des Datenbestands als mehrdimensionaler Würfel, der durch wiederholtes iteratives Unterteilen in allen Dimensionen in Subwürfel unterteilt wird, bis aufeinanderfolgende Subwürfel zu Regionen zusammenfaßbar sind, die jeweils eine Menge von Datenobjekten beinhalten, die auf einer Speicherseite gegebener Speicherkapazität des Speichermediums abspeicherbar sind.

Wird nun ein derartiger UB-Baum zum Lesen, Bereitstellen und/oder Verbinden von Daten in eine vorgegebene Anzahl von Unterräumen unterteilt, so kann erfindungsgemäß eine Abarbeitung der abgespeicherten Daten durch sukzessives Abarbeiten der Unterräume in der Richtung einer Dimension des mehrdimensionalen Datenbestandes erfolgen, ohne daß ein Sortieren bezüglich eines gegebenen Attributs auf dem peripheren Speicher notwendig wäre.

In Ausgestaltung der Erfindung ist ein Cache-Speicher zum Zwischenspeichern von den in Abarbeitung befindlichen Unterraum schneidenden Regionen (Sprungregionen) des UB-Baums bis zur erfolgten vollständigen Abarbeitung der Sprungregion oder Sprungregionen in nachfolgenden Unterräumen vorgesehen. Dadurch wird ein weiterer Vorteil erzielt, weil durch die erfindungsgemäße Zwischenspeicherung in einem Cache-Speicher jede Region nur einmal aus dem UB-Baum gelesen werden muß und aus dem Bereich des in Abarbeitung befindlichen Unterraums hinausragende Regionen (Sprungregionen) bis zu ihrer vollständigen Abarbeitung in einem oder mehreren nachfolgenden Unterräumen zwischengespeichert werden. Dabei kann entweder die gesamte Sprungregion zwischengespeichert werden oder nur derjenige Teil der Sprungregion, der über den in Abarbeitung befindlichen Unterraum hinausragt.

In weiterer Ausgestaltung der Erfindung erfolgt eine Vorgabe der Anzahl und/ oder der Breite der Unterräume durch eine Steuereinrichtung. Durch eine derartige Steuereinrichtung kann die Anzahl und/oder die Breite der Unterräume individuell für einen gegebenen UB-Baum festgelegt und vorgegeben werden. Dies gestattet eine jeweils bestmögliche Unterteilung des zur Verarbeitung anstehenden UB-Baums. Vorteilhafterweise ist die Steuereinrichtung ein Teil der Recheneinrichtung des Datenbanksystems.

In Ausgestaltung der Erfindung erfolgt eine Vorgabe der Breite der Unterräume als Minimierungsfunktion der Speicherkapazität des Cache-Speichers. Der als UB-Baum abgespeicherte Datenbestand wird somit im Hinblick auf eine möglichst geringe Speicherkapazität des Cache-Speichers unterteilt.

In weiterer Ausgestaltung der Erfindung erfolgt die Unterteilung in Unterräume gleicher Breite. Dies erleichtert das sukzessive Abarbeiten der Datenunterräume und insbesondere die Abarbeitung von zwischengespeicherten Sprungregionen bzw. Teilen von Sprungregionen.

Zur weiteren Lösung der Erfindung wird ein Verfahren zum Betrieb eines Datenbanksystems mit den Merkmalen des Anspruchs 8 vorgeschlagen.

In Ausgestaltung der Erfindung sind zum Lesen von Daten in einer beliebigen Sortierreihenfolge bei dem erfindungsgemäßen Verfahren die folgenden Schritte vorgesehen:

1. Unterteilen eines als UB-Baum abgespeicherten mehrdimensionalen Datenbestands in eine vorgegebene Anzahl n von Unterräumen,
2. Einlesen der Daten des ersten Unterraums des UB-Baums in einen Arbeitsspeicher,
3. regionenweises Abarbeiten (Sortieren und/oder Bereitstellen) der Daten des Unterraums,
4. Löschen derjenigen Regionen im Arbeitsspeicher, die keine Schnittmenge mit nachfolgenden Unterräumen aufweisen,
5. Zwischenspeichern derjenigen Regionen in einem Cache-Speicher, die mit mindestens einem der nachfolgenden Unterräume eine Schnittmenge aufweisen (Sprungregionen),
6. Einlesen des nächsten Unterraums des Datenbestands in den Arbeitsspeicher,
7. Wiederholen der Verfahrensschritte 3. bis 6. solange, bis der letzte Unterraum abgearbeitet ist, wobei bei jedem neuen Unterraum zunächst die im Cache-Speicher zwischengespeicherten Sprungregionen abgearbeitet und, falls sie nicht noch weitere Unterräume schneiden, gelöscht werden.

Durch das erfindungsgemäße Verfahren wird das Lesen und Bereitstellen von Daten eines als UB-Baum abgespeicherten mehrdimensionalen Datenbestands in einer beliebigen Sortierreihenfolge ermöglicht, ohne daß eine Vor- oder Umsortierung notwendig wäre. Insbesondere wird bei dem erfindungsgemäßen Verfahren jedes Datenobjekt des UB-Baums nur einmal in den Arbeitsspeicher des Datenbanksystems gelesen.

Als besonders vorteilhafte Lösung der der Erfindung zugrunde liegenden Aufgabe wird des weiteren ein Verfahren zum Durchführen einer Verbundoperation zwischen zwei Verbundpartnern vorgeschlagen, wovon mindestens ein Verbundpartner ein als UB-Baum abgespeicherter mehrdimensionaler Datenbestand ist, mit den folgenden Schritten:

1. Unterteilen der Verbundpartner in n Unterräume,
2a. Einlesen der Daten des ersten Unterraums eines ersten Verbundpartners in einen Arbeitsspeicher,
2b. Einlesen der Daten der ersten Region des ersten Unterraums eines zweiten, als UB-Baum abgespeicherten Verbundpartners,
3. Abarbeiten (Finden und Zuordnen) der im Arbeitsspeicher befindlichen Daten der Verbundpartner,
4. Löschen der Region im Arbeitsspeicher, falls diese keine Schnittmenge mit mindestens einem der nachfolgenden Unterräume des UB-Baums aufweist, anderenfalls Zwischenspeichern der Region (Sprungregion) in einem Cache-Speicher,
5. Einlesen der nächsten Region des zweiten Verbundpartners in den Arbeitsspeicher,
6. Wiederholen der Verfahrenschritte 3. bis 5. solange, bis die letzte Region des ersten Unterraums des zweiten Verbundpartners abgearbeitet ist,
7. Einlesen des nächsten Unterraums des ersten Verbundpartners und regionenweises Einlesen des nächsten Unterraums des zweiten Verbundpartners,
8. Wiederholen der Verfahrenschritte 3. bis 7. solange, bis der letzte Unterraum abgearbeitet ist, wobei bei jedem neuen Unterraum zunächst die im Cache-Speicher zwischengespeicherten Sprungregionen abgearbeitet und, falls sie nicht noch weitere Unterräume schneiden, gelöscht werden.

Erfindungsgemäß werden demnach zwei Verbundpartner durch Unterteilen beider Verbundpartner in eine vorgegebene Anzahl n von Unterräumen unterteilt und durch sukzessives Zuordnen der Daten in den Unterräumen miteinander verbunden, ohne daß eine Vor- oder Umsortierung eines oder beider Verbundpartner notwendig wäre. Erfindungsgemäß wird dabei ein abzuarbeitender Unterraum des als UB-Baum abgespeicherten Verbundpartners regionenweise eingelesen, die in der Region enthaltenen Datenobjekte werden durch Zuordnung mit den Datenobjekten des entsprechenden Unterraums des Verbundpartners des UB-Baums abgearbeitet und anschließend gelöscht, sofern sie keine Schnittmenge mit mindestens einem der nachfolgenden Unterräume des UB-Baums aufweist. Anderenfalls wird die Region als Sprungregion in einem Cache-Speicher zwischengespeichert. Bei jedem in der Abarbeitungsfolge neuen Unterraum werden zunächst die im Cache-Speicher zwischengespeicherten Sprungregionen abgearbeitet und, falls sie nicht noch weitere Unterräume schneiden, gelöscht.

Das erfindungsgemäße Verfahren zum Durchführen einer Verbundoperation ist auch auf mehr als zwei Verbundpartner anwendbar, wobei jeder weitere Verbundpartner in gleicher Art und Weise in eine vorgegebene Anzahl n von Unterräumen unterteilt wird und in einer entsprechenden Richtung sukzessive abgearbeitet wird, indem die zuzuordnenden Datenobjekte einer Region nicht nur einem weiteren Verbundpartner, sondern nacheinander mehreren Verbundpartnern unter Durchführung eventueller Verknüpfungsoperationen zugeordnet wird.

Die Erfindung ist in der Zeichnung anhand von Ausführungsbeispielen schematisch dargestellt und wird im folgenden näher erläutert.

Figuren 1a bis 1c      veranschaulichen das erfindungsgemäße Verfahren zum Lesen von Daten in beliebiger Sortierreihenfolge anhand eines dreidimensionalen UB-Baum-Datenbestands.

Figur 2      dient zur Veranschaulichung der Abarbeitung und Zwischenspeicherung von Sprungregionen anhand eines zweidimensionalen UB-Baum-Datenbestands.

Figur 3      zeigt eine erfindungsgemäße Verbundoperation zwischen zwei jeweils zweidimensionalen Relationen R und S.

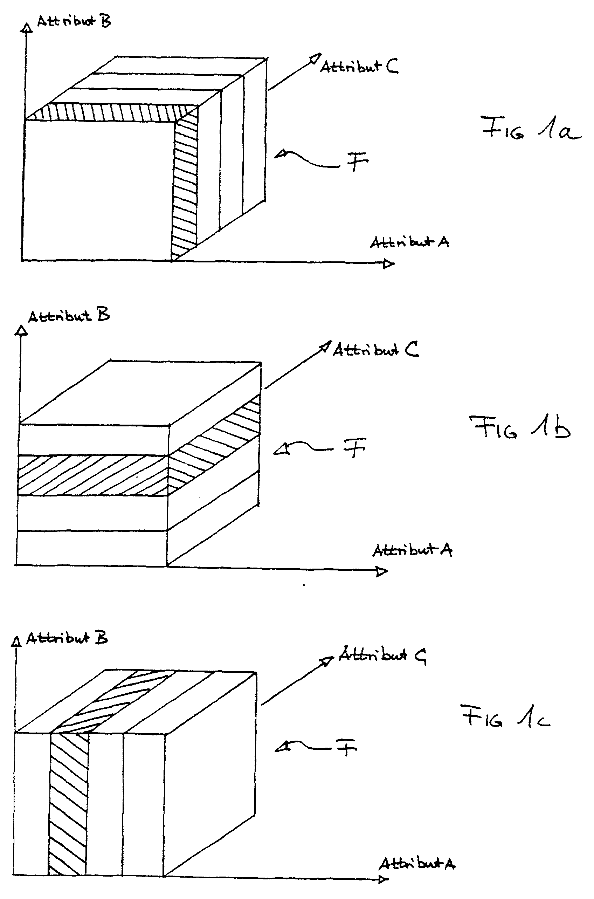

Die Figuren 1a bis 1c zeigen einen dreidimensionalen Datenbestand F mit Attributen A, B, C, der als UB-Baum so organisiert ist, daß der mehrdimensionale Index über den Attributen A, B und C angelegt ist. Beispielsweise kann es sich bei den Attributen A, B und C um die Attribute "Name", "Postleitzahl" und "Faxnummer" handeln.

Für drei Attribute A, B, C ergeben sich als mögliche Sortierordnungen die folgenden Kombinationen:

| ABC | BAC | CAB |
|-----|-----|-----|
| ACB | BCA | CBA |
| AB | BA | CA |
| AC | BC | CB |
| A | B | C |

also insgesamt 15 verschiedene Sortierordnungen.

Im allgemeinen Fall ergibt sich für einen mehrdimensionalen UB-Baum der Dimension d

$$d! + d*(d-1)*...*2 + ...+ d*(d-1)*...*i + ... + d*(d-1) + d$$

mögliche Sortierordnungen. (Für d=3 ergibt sich 3! + 3*2 + 3 = 15)

Zur Durchführung des erfindungsgemäßen Verfahrens (nachfolgend "UB-Cache-Verfahren" genannt) wird der zu verarbeitende Datenbestand F bezüglich einer Dimension in eine vorgegebene Anzahl n von Unterräumen unterteilt. Soll in dem in den Figuren 1a bis 1c dargestellten dreidimensionalen Ausführungsbeispiel ein Lesen bzw. Verarbeiten der Daten in einer Sortierreihenfolge bezüglich des Attributs C vorgenommen werden, so erfolgt eine Unterteilung des Datenbestands F in n-Unterräume in der Dimension des Attributs C (vergleiche Figur 1a).

Soll der Datenbestand bezüglich des Attributs B gelesen bzw. verarbeitet werden, so erfolgt eine Unterteilung in n-Unterräume in der Dimension des Attributs B (Figur 1b). Figur 1c zeigt den entsprechenden Fall für eine Unterteilung in n-Unterräume des Datenbestands F in der Dimension des Attributs A.

Die Unterteilung des Datenbestands erfolgt durch vorzugsweise äquidistante Hyperebenen, wobei ein Abschnitt des Datenbestandes zwischen zwei aufeinanderfolgenden Hyperebenen einen Datenunterraum (= mehrdimensionale Scheibe) bildet. Im zweidimensionalen Fall (vergleiche Figur 2) sind die Datenunterräume Zeilen und Spalten.

Im Beispiel des in der Figur 1a dargestellten Datenbestands erfolgt eine Unterteilung durch aufeinanderfolgende Hyperebenen der Form

$$C = j/n*c$$

in Scheiben der Breite 1/n, der sogenannten C-Scheiben.

Die i-te C-Scheibe enthält dann genau die Daten mit der Eigenschaft, daß für Attribut C gilt:

$$(i-1)*c/n < = C < i*c/n,$$

wobei das Attribut C Werte zwischen 0 und einer vorgegebenen Zahl c annehmen kann.

Sollen die Daten im vorgegebenen Raum nach dem Attribut A sortiert werden, so wird folgendermaßen vorgegangen:

    **for** j := 1 **to n do**

        sortiere Daten in j-ter Scheibe und
        gebe diese Daten in Sortierreihenfolge aus.

Diese zeilenweise Bearbeitung funktioniert, weil in der Sortierordnung bzgl. Attribut A alle Daten in der 1. Scheibe vor allen Daten in der 2. Scheibe und i.a. alle Daten in der j-ten Scheibe vor den Daten in der j+1-ten Scheibe kommen.

Bei einer sukzessiven Abarbeitung werden die Scheiben der Reihe nach abgearbeitet. Figur 1a zeigt beispielhaft schraffiert die erste Scheibe bezüglich Attribut C, Figur 1b entsprechend die dritte Scheibe bezüglich Attribut B und Figur lc die zweite Scheibe bezüglich Attribut A.

Die Anzahl n der Scheiben genügt der Bedingung n = $2^k$ mit k $\geq$ 0, wobei k ein Maß für die Unterteilung des Datenraumes ist. Nach k-facher Unterteilung eines Datenraumes mit der Kantenlänge 1 erhält man somit Subwürfel der Seitenlänge 1/n.

Figur 2 zeigt anhand eines zweidimensionalen Datenbestands einen UB-Baum mit den Regionen 01, 023, 101, 12, 131, 201, 221, 301, 32, 331 und 4 (unendlich), wobei der Einfachheit halber die Region mit der Obergrenze ihrer Adresse benannt ist. Dieser Datenbestand ist nach k = 3 Unterteilungen in minimale Subwürfel bzw. Subquadrate der Kantenlänge 1/n unterteilt mit n = 8.

Allgemein wird ein Subwürfel durch die Regionen des UB-Baumes so abgedeckt, daß es eine erste Region gibt, die den Würfel schneidet, aber eventuell nicht ganz in diesem Würfel enthalten ist. Eine derartige Region wird Sprungregion genannt, da sie von außen in den Subwürfel hineinspringt. Dann wird der Subwürfel durch weitere Regionen aufgefüllt bis zur letzten Region, die eventuell nicht mehr ganz in dem Subwürfel enthalten ist und aus ihm hinausspringt. Bei dieser Region handelt es sich ebenfalls um eine Sprungregion. Pro Subwürfel auf einer gegebenen Unterteilungsebene des k-fach unterteilten Datenbestandes kann es unabhängig von der Unterteilungsebene maximal nur zwei Sprungregionen geben.

Zur Durchführung des erfindungsgemäßen Verfahrens ist das in der Figur 2 dargestellte Beispiel eines zweidimensionalen Datenbestands in n = $2^3$ = 8 Zeilen (waagerechte zweidimensionale Scheiben) unterteilt.

Bei einem Lesen bzw. Verarbeiten der in dem Datenbestand enthaltenen Datenobjekte werden zuerst die in Zeile 1 enthaltenen Daten regionenweise gelesen. Ist eine Region nicht vollständig in der Zeile 1 enthalten, so handelt es sich um eine Sprungregion, die mit mindestens einer weiteren Zeile Schnittmengen bildet. Diejenigen Datenobjekte der Sprungregion, die nicht in der in Verarbeitung befindlichen Zeile enthalten sind, werden erfindungsgemäß zwischengespeichert bis die Sprungregion in nachfolgenden Zeilen vollständig abgearbeitet ist. Zum Lesen der Daten wird somit die gegebenen Zeile j als Query-Box FZ[j] betrachtet und es werden diejenigen Regionen, die FZ[j] schneiden, vom peripheren Speicher in einen Zwischenspeicher, der beispielsweise Teil des Arbeitsspeichers bildet, eingelesen und dort intern sortiert. Die Daten aus FZ[j] können sofort weiterverarbeitet werden, die Daten aus Sprungregionen, die nicht in FZ[j] liegen, werden für eine spätere Abarbeitung zwischengespeichert.

Im Beispiel der Figur 2 existieren für jede Zeile die folgenden Sprungregionen:

| | | | | |
|---|---|---|---|---|
| Zeile 1 | 01 | 023 | 101 | 12 |
| Zeile 2 | | 023 | 101 | |
| Zeile 3 | | 023 | 101 | 131 | 201 |
| Zeile 4 | | | | 201 |
| Zeile 5 | 221 | 301 | 32 | |
| Zeile 6 | 221 | (301) | | |

(fortgesetzt)

| Zeile 7 | 301 331 unendlich |
|---|---|
| Zeile 8 | keine Sprungregion mehr, |

wobei die Regionen jeweils durch die höhere ihrer beiden Adressen angegeben sind. Das Beispiel zeigt die Sprungregionen pro Zeile und die jeweiligen Inhalte des Zwischenspeichers (im folgenden UB-Puffer genannt). Gleichzeitig wird ersichtlich, daß die Abschätzung der möglichen Sprungregionen mit zwei Sprungregionen pro Subwürfel eine pessimistische Abschätzung ist. In dem dargestellten Ausführungsbeispiel könnten pro Zeile maximal bis zu 16 Sprungregionen auftreten ($n = 2^3 = 8$ Subwürfel mit jeweils maximal 2 Sprungregionen), während tatsächlich aber nur maximal 4 Sprungregionen pro Zeile auftreten.

Zeile 1 in Figur 2 wird demnach von den Regionen 01, 023, 101 und 12 geschnitten. Jede dieser Regionen bildet somit bezüglich der Zeile 1 eine Sprungregion und es wird wenigstens der Anteil der Datenobjekte jeder Region zwischengespeichert, der nicht in der Zeile 1 enthalten ist. Zeile 2 wird ebenfalls von den Regionen 01, 023, 101 und 12 geschnitten. Da jedoch die beiden Regionen 01 und 12 nur in die Zeile 2 hineinspringen, jedoch nicht mehr aus ihr heraus, werden sie mit ihren im UB-Puffer zwischengespeicherten Datenobjekten im Rahmen der Zeile 2 vollständig abgearbeitet, so daß als weiterhin im UB-Puffer zwischenzuspeichernde Regionen die beiden Regionen 023 und 101 aufgeführt sind, die aus der Zeile 2 herausspringen und weitere Schnittmengen mit den Zeilen 3 und 4 bilden.

Aufschlußreich ist die Zeile 6, bei der nur die Sprungregion 221 auftritt (Region 32 wird im Rahmen der Zeile 6 vollständig abgearbeitet), aber die geklammerte Region 301 noch im UB-Puffer steht für die spätere Bearbeitung im Rahmen der Zeile 7.

Soll der in Figur 2 dargestellte zweidimensionale Datenbestand nicht in der Sortierreihenfolge des nicht näher bezeichneten vertikalen Attributs gelesen werden, sondern in der Sortierreihenfolge des horizontalen Attributs, so erfolgt eine Unterteilung nicht in Zeilen, sondern in Spalten, und die Regionen werden nicht zeilenweise, sondern spaltenweise gelesen. Im allgemeinen d-dimensionalen Fall ergeben sich anstelle von Zeilen bzw. Spalten durch Hyperebenenvoneinander getrennte Scheiben.

Das erfindungsgemäße UB-Cache-Verfahren dient somit dazu, einen gegebenen Datenraum scheibenweise zu verarbeiten, die überstehenden Sprungregionen zwischenzuspeichern und die Datentransporte optimal zu steuern.

Das erfindungsgemäße Verfahren besteht im wesentlichen aus zwei Komponenten, dem sogenannten UB-Puffer und der sogenannten UB-Steuerung. Der UB-Puffer ist vorteilhafterweise Teil des Arbeitsspeichers und dient zum Zwischenspeichern von Sprungregionen bzw. Teilen von Sprungregionen für einen späteren Verarbeitungszeitpunkt. Die UB-Steuerung dient zu einer optimalen Steuerung des Datentransports zwischen dem peripheren Speicher und dem UB-Puffer und nimmt die eigentliche Datenverarbeitung (beispielsweise interne Sortierung oder Verbundoperation) der Daten im UB-Puffer vor.

Der UB-Puffer wird demnach für 2 Aufgaben benötigt:

1. Einlesen aller Regionen, die einen Scheibenbereich schneiden.
2. Zwischenspeichern derjenigen Teile der im Schritt 1 eingelesenen Sprungregionen, die sich nicht in der momentan in Bearbeitung befindlichen Scheibe befinden und deshalb aufgehoben werden müssen, bis die Scheibe, in der sie liegen, bearbeitet wird.

Die UB-Steuerung hat demnach folgende Aufgaben:

1. Bestimmung der optimalen Scheibeneinteilung für F.
2. Steuerung der Datentransporte vom peripheren Speicher in den UB-Puffer.
3. Internes im UB-Puffer Sortieren der Daten in den eingelesenen Regionen. Dafür werden Standard-Sortierverfahren für internes Sortieren eingesetzt, z.B. Heapsort oder Quicksort.
4. Ausgabe der im momentanen Scheibenbereich liegenden Daten in der gewünschten Sortierreihenfolge.
5. Verwaltung der Teile der Sprungregionen, die für spätere Scheibenbearbeitung noch benötigt werden.

Als Algorithmus auf einer hohen Programmierebene für den allgemeinen Fall des erfindungsgemäßen Verfahrens zum Lesen und Bereitstellen von Daten in einer beliebigen Sortierreihenfolge läßt sich folgendes angeben:
Ein gegebener mehrdimensionaler Datenbestand F sei k-mal unterteilt worden, d.h. es gibt $n = 2^k$ Scheiben von 1 bis n, pro Scheibe ebenfalls n Subwürfel und somit maximal 2n Sprungregionen. Die i-te Scheibe des Datenbestands F wird als FS[i] bezeichnet.
UB-Puffer := **leer**;
**for** i := 1 **to n do**

```
begin co bearbeite i-te Scheibe oc
        for alle Regionen r im UB-Puffer do
                begin if r schneidet FS[i] then
                        begin bearbeite Daten in r (insbesondere: sortiere sie intern im UB-Puffer);
                                if r ist vollständig abgearbeitet
                                then lösche r aus UB-Puffer
                        end
                end;
        for alle Regionen r, die FS[i] schneiden, aber noch nicht im UB-Puffer waren do
                begin lese r von Festplatte;
                        co hier wird FS[i] wie eine Query-Box für den UB-Baum betrachtet oc
                                bearbeite Daten aus dem Durchschnitt von r mit FS[i];
                                if r ist eine Sprungregion
                                then r in UB-Puffer zwischenspeichern
                        end;
                        co jetzt stehen alle Daten aus FS[i] im UB-Puffer in Sortierreihenfolge bereit oc
                        Daten, die in FS[i] liegen , in Sortierreihenfolge bearbeiten, z.B. drucken, am Bildschirm präsentieren, oder im Fall von Relationen mit Hilfe der relationalen Algebra weiterverarbeiten
                        end
                co nach Abarbeitung der letzten Scheibe muß UB-Puffer leer sein, da keine Region über die letzte Scheibe
von F hinausspringen kann oc
```

Falls F in Scheiben der Breite 1/n unterteilt ist, ergibt sich für die Bearbeitung von F in Sortierreihenfolge die erforderliche Größe des UB-Puffers im zweidimensionalen Fall wie folgt:

$$B(F,n) = |F|/n + 2*n*|P|$$

|F|/n wird benötigt für die Scheibe selbst, 2*n*|P| für die Sprungregionen, wobei |F| die Größe von F und |P| die Größe einer Datenseite in Bytes sind.

Diese Puffergröße wird minimal, wenn die Ableitung nach n Null wird, also für:

$$B'(F,n) = -1*|F|/n^2 + 2*|P| = 0$$

mit der optimalen Größe $n_{opt}$ für n:

$$n_{opt} = \text{Wurzel}\,(|F|/(2*|P|)).$$

Näherungsweise wählt man nun k so, daß $n=2^k$ möglichst nahe an $n_{opt}$ liegt und bekommt so eine fast optimale Größe für den UB-Puffer.

Folgendes Rechenbeispiel dient zur Veranschaulichung benötigter Speichergrößen:

$$|F| = 10^9 \text{ Bytes}, \quad |P| = 10^3 \text{ Bytes}$$

$$n_{opt} = \text{Wurzel}\,(10^9/(2*10^3)) = 707$$

Wählt man k=10 und somit n = 1024, so ergibt sich für B(F,1024) = 3 MB
Wählt man k= 9 und somit n = 512, so ergibt sich für B(F,512) = 3 MB
Das exakte Optimum würde bei $B(F,707) = 10^9/707 + 2*707*10^3 = 2.82$ MB liegen.

Das zeigt außerdem, daß B(F,n) ein sehr flaches Minimum hat und gegenüber der exakten Wahl von n nicht sehr sensitiv ist.

Im allgemeinen d-dimensionalen Fall ergibt sich für die Bearbeitung von F in Sortierreihenfolge die erforderliche Größe des UB-Puffers wie folgt:

$$B(F,n,d) = |F|/n + 2^*n^{d-1}{}^*|P|$$

$|F|/n$ wird benötigt für den Unterraum (die Scheibe) selbst, $2^*n^{d-1}{}^*|P|$ für die Sprungregionen.

Diese Puffergröße wird minimal, wenn die Ableitung nach n Null wird, also für:

$$B'(F,n,d) = -1^*|F|/n^2 + 2^*(d-1)^* n^{d-2}{}^*|P| = 0$$

mit der optimalen Größe $n_{opt}$ für n:

$$n_{opt} = \text{d-te Wurzel } (|F|/(2^*(d-1)^*|P|)).$$

Das erfindungsgemäße UB-Cache-Verfahren dient in besonders vorteilhafter Weise als Grundlage für ein Verfahren zum Durchführen einer Verbundoperation.

Die meisten Operationen der relationen Algebra erfordern für eine effiziente Ausführung, daß zumindest einer oder auch beide der an der Operation beteiligten Operanten (Relationen) in Sortierordnung nach bestimmten Attributen vorliegen. Wie vorstehend ausgeführt, müssen bei konventionellen Datenbanken die Relationen aus diesem Grunde sehr häufig sortiert werden. Dabei ist ein mehrfacher Hin- und Hertransport der Daten zwischen dem Arbeitsspeicher des Rechners und der Festplatte erforderlich. Erfindungsgemäß können mit dem UB-Cache-Verfahren Datenbestände, die als UB-Baum organisiert sind, so gelesen und verarbeitet werden, als wären sie auf der Festplatte sortiert. Durch das UB-Cache-Verfahren werden deshalb die bisher nötigen Sortiervorgänge vermieden. Dadurch können auch die oben erwähnten Datentransporte (für Sortierzwecke) zwischen Arbeitsspeicher und Festplatte vermieden werden und die Operationen der relationalen Algebra können deutlich schneller ausgeführt werden. Aus diesem Grunde kann durch das UB-Cache-Verfahren die Ausführung von relationalen Operatoren in allen relationalen Datenbanksystemen wesentlich beschleunigt werden. Manche Operationen der relationalen Algebra werden in ähnlicher Form auch in anderen Datenbanksystemen, beispielsweise objektorientierten Datenbanksystemen eingesetzt. Auch diese Operationen können mit dem erfindungsgemäßen UB-Cache-Verfahren entsprechend beschleunigt werden.

Im Stand der Technik werden beispielsweise bei einer Verbundoperation (Join) zwischen 2 Relationen R und S üblicherweise die folgenden Verarbeitungsschritte ausgeführt:

1. Relation R von Festplatte lesen
2. R portionsweise vorsortieren
3. R portionsweise auf Festplatte schreiben
4. R portionsweise wieder von Festplatte lesen
5. R durch einen sog. Mischvorgang sortieren
6. R auf Festplatte schreiben.
7. Falls S noch nicht nach dem Join-Attribut sortiert ist, müssen nun die Schritte 1 bis 6 sinngemäß ebenfalls für S ausgeführt werden. Die Schritte 1 bis 7 sind Vorbereitungsschritte für die eigentliche Verbund Operation:
8. S portionsweise in Sortierreihenfolge von Festplatte lesen.
9. R portionsweise in Sortierreihenfolge von Festplatte lesen und mit den passenden Tupeln aus S joinen (eigentliche Verbundoperation)
10. Verbundergebnis auf Festplatte schreiben

Die Schritte 4,5,6 werden mindestens einmal, bei manchen Sortierverfahren sogar mehrfach ausgeführt. Insgesamt wird R also mindestens dreimal von der Festplatte gelesen (in Schritten 1,4,6) und dreimal auf die Festplatte geschrieben (in Schritten 3,6,10, da das Verbundergebnis die Daten aus R und S enthält). Genau wie R wird auch S mindestens dreimal von der Festplatte gelesen und dreimal auf die Festplatte geschrieben. Das eben beschriebene Verbund-Verfahren ist in der Literatur auch als *sort-merge-join* bekannt.

Wenn die Relation R in geeigneter Weise als UB-Baum organisiert ist, kann R nun mit Hilfe des UB-Cache Verfahrens so gelesen werden, als sei R auf der Festplatte sortiert. Dasselbe gilt sinngemäß für S. Dadurch entfallen in dem oben beschriebenen Verbundverfahren die Schritte 1 bis 7. Dadurch wird das gesamte Verbundverfahren mindestens um den Faktor 3 beschleunigt.

Da bei den meisten Operationen der relationalen Algebra (nicht nur bei der Join-Operation, sie ist aber die wichtigste) die beteiligten Relationen sortiert gelesen werden müssen (und deshalb nach den bisher üblichen Verfahren erst einmal sortiert werden müssen), entfallen mit dem UB-Cache Verfahren in Verbindung mit dem UB-Baum diese Sortiervorgänge und die Operationen können wesentlich beschleunigt werden.

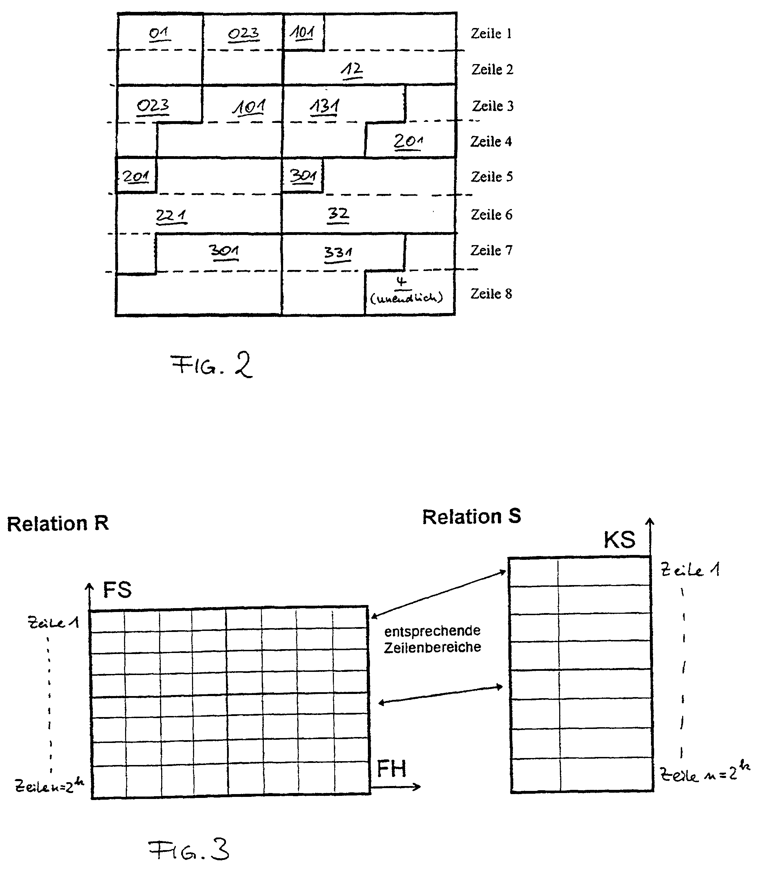

Unter Bezugnahme auf die Figur 3 wird nachfolgend die Arbeitsweise eines erfindungsgemäßen Join-Algorithmus mit dem UB-Cache-Verfahren erläutert.

1. Durch die Optimierung der Puffergröße bestimmt die UB-Steuerung automatisch $n_{opt}$. Für das Beispiel wird $n_{opt}$ = n = 8 angenommen.

2. Eine Relation R, die als UB-Baum organisiert ist, wird nun in Portionen der Größe 1/n unterteilt, wobei $n=2^k$, im Beispiel also k=3. Im zweidimensionalen Fall sind diese Portionen Zeilen. Sie seien von 1 bis n durchnumeriert.

3. Nach k Unterteilungen des Raumes liegen in einer Zeile dann n Subwürfel, im Beispiel 8 Quadrate.

4. Für die Verbundoperation wird nun eine Zeile von S ganz in den UB-Puffer gelesen (entsprechend Schritt 8 in dem vorher beschriebenen *sort-mergejoin*). Falls S als B-Baum organisiert oder geeignet sortiert ist, kann genau eine Zeile vom peripheren Speicher in den UB-Puffer gelesen werden. (Falls S als UB-Baum organisiert ist, wird der Zeilenbereich sortiert gelesen, die überstehenden Teile der Sprungregionen werden im UB-Puffer für später zwischengepuffert.)

5. Die Relation R wird nun zeilenweise bearbeitet, um z.B. die Tupel in dieser Zeile mit den dazu passenden Tupeln aus der entsprechenden Zeile von S zu verbinden (entsprechend Schritt 9 in dem vorher beschriebenen *sort-mergejoin*). Dazu werden diejenigen Regionen von der Festplatte gelesen, die die n Subwürfel einer Zeile abdecken. Da Regionen eines UB-Baums ja genau einer Festplattenseite entsprechen, werden Regionen immer als Ganzes von der Festplatte in den Hauptspeicher transportiert (gelesen). Dabei gibt es nun die folgenden 2 Fälle:

- Diejenigen Regionen, die ganz in der Zeile enthalten sind, können sofort vollständig abgearbeitet und mit ihren Partnern aus der entsprechenden Zeile von S verbunden werden, sie brauchen also nicht zwischengepuffert zu werden.
- Diejenigen Regionen, die über die Zeile hinausspringen in später zu bearbeitende Zeilen (Sprungregionen) enthalten zwei Arten von Daten: solche, die in der in Bearbeitung befindlichen Zeile liegen (*zeileninterne Daten*) und solche, die außerhalb dieser Zeile liegen (*zeilenexterne Daten*). Die zeileninternen Daten können sofort abgearbeitet werden und mit ihren Partnern aus der entsprechenden Zeile von S verbunden werden, die zeilenexternen Daten werden im UB-Puffer zwischengepuffert und aufgehoben, bis später diejenige Zeile bearbeitet wird, in der sie liegen.

Hier ist es wichtig, die Anzahl der Sprungregionen, die maximal auftreten können, zu kennen, um den Speicherbedarf für das Zwischenspeichern von Sprungregionen von R oder zumindest ihrer zeilenextemen Daten im UB-Puffer abzuschätzen. Der Einfachheit halber wird angenommen, daß die Sprungregionen insgesamt zwischengespeichert werden. Durch die Aufteilung in zeileninterne und zeilenexterne Daten ließe sich der Speicherbedarf für R in dem UB-Puffer noch mal etwa auf die Hälfte reduzieren, da ja in Wirklichkeit erfindungsgemäß nur die zeilenexternen Daten von R zwischengespeichert werden müssen.

Die erforderliche Größe des UB-Puffers für das Join-Verfahren ergibt sich nun so:

**Fall 1**: S sei geeignet sortiert, R sei als UB-Baum organisiert:

- ganze Zeile von S speichern:

$$|S|/n \text{ Bytes}$$

- Sprungregionen aus Zeile von R speichern $2*n*|P|$ Bytes
- Gesamtbedarf:

$$B1(S,n) = |S|/n + 2*n*|P| \text{ Bytes}$$

Das Optimum ergibt sich für

$$B1'(S,n) = -|S|/n^2 + 2*|P| = 0$$

und somit

$$n_{opt} = \text{Wurzel}\ (|S|(2*|P|)).$$

**Fall 2**: Beide Relationen R und S sind nicht geeignet sortiert, aber als UB-Bäume organisiert

■  ganze Zeile von S speichern und Sprungregionen dieser Zeile speichern:

$$|S|/n + 2*n*|P|\ \text{Bytes}$$

■  Sprungregionen aus Zeile von R speichern $2*n*|P|$ Bytes
■  Gesamtbedarf:

$$B2(S,n) = |S|/n + 4*n*|P|\ \text{Bytes}$$

Das Optimum ergibt sich für

$$B2'(S,n) = -|S|/n^2 + 4*\ |P| = 0$$

und somit

$$n_{opt} = \text{Wurzel}\ (|S|/(4*|P|)).$$

Der in den Patentansprüchen wiedergegebene Erfindungsgedanke umfaßt auch eine Verwendung des erfindungsgemäßen Datenbank systems und des erfindungsgemäßen UB-Cache-Verfahrens auf weitere Operationen der relationalen Algebra, beispielsweise Projektionen, Mengenvereinigungen usw.

## Patentansprüche

1.  Datenbanksystem mit einer Recheneinrichtung, einem Arbeitsspeicher und einer insbesondere peripheren Speichereinrichtung, in der mindestens ein mehrdimensionaler Datenbestand als UB-Baum abgespeichert ist, dadurch gekennzeichnet, daß zum Lesen und Bereitstellen des Datenbestan'ds in einer beliebigen Sortierreihenfolge ein Unterteilen des UB-Baums in eine vorgegebene Anzahl von Unterräumen und ein sukzessives Abarbeiten der Unterräume durch regionenweises Abarbeiten der Daten jedes Unterraums erfolgt, wobei die Regionen aufeinanderfolgende Subwürfel des in einem mehrdimensionalen Würfel liegenden Datenbestands zusammenfassen und jeweils eine Menge von Datenobjekten beinhalten, die auf einer Speicherseite gegebener Speicherkapazität abspeicherbar sind.

2.  Datenbanksystem nach Anspruch 1, dadurch gekennzeichnet, daß ein Cache-Speicher zum Zwischenspeichern von den in Abarbeitung befindlichen Unterraum schneidenden Regionen (Sprungregionen) des UB-Baums bis zur erfolgten vollständigen Abarbeitung der Sprungregion oder Sprungregionen in nachfolgenden Unterräumen vorgesehen ist.

3.  Datenbanksystem nach Anspruch 1 oder 2, dadurch gekennzeichnet, daß eine Verbundoperation zwischen dem UB-Baum und mindestens einem weiteren Verbundpartner durch Unterteilen des Verbundpartners in eine der Anzahl der Unterräume des UB-Baums entsprechende Anzahl von Unterräumen und durch sukzessives Abarbeiten der jeweiligen Unterräume unter Verbinden von Datenteilbeständen der Verbundpartner erfolgt.

4.  Datenbanksystem nach einem der Ansprüche 1 bis 3, dadurch gekennzeichnet, daß eine Vorgabe der Anzahl und/ oder der Breite der Unterräume durch eine Steuereinrichtung erfolgt.

5.  Datenbanksystem nach Anspruch 4, dadurch gekennzeichnet, daß die Steuereinrichtung Teil der Recheneinrichtung ist.

**6.** Datenbanksystem nach einem der Ansprüche 1 bis 5, dadurch gekennzeichnet, daß eine Vorgabe der Breite der Unterräume als Minimierungsfunktion der Speicherkapazität des Cache-Speichers erfolgt.

**7.** Datenbanksystem nach einem der Ansprüche 1 bis 6, dadurch gekennzeichnet, daß die Unterteilung in Unterräume gleicher Breite erfolgt.

**8.** Verfahren zum Betrieb eines Datenbanksystems, insbesondere nach einem der Ansprüche 1 bis 7, wobei mindestens ein mehrdimensionaler Datenbestand in einer insbesondere peripheren Speichereinrichtung als UB-Baum abgespeichert ist, dadurch gekennzeichnet, daß zum Lesen und Bereitsstellen des Datenbestands in einer beliebigen Sortierreihenfolge der UB-Baum in eine vorgegebene Anzahl von Unterräumen unterteilt wird und die Unterräume sukzessive durch regionenweises Abarbeiten der Daten jedes Unterraums abgearbeitet werden, wobei die Regionen aufeinanderfolgende Subwürfel des in einem mehrdimensionalen Würfel liegenden Datenbestands zusammenfassen und jeweils eine Menge von Datenobjekten beinhalten, die auf einer Speicherseite gegebener Speicherkapazität abspeicherbar sind.

**9.** Verfahren nach Anspruch 8, bei dem zum Lesen von Daten in einer beliebigen Sortierreihenfolge die folgenden Schritte vorgesehen sind:

1. Unterteilen eines als UB-Baum abgespeicherten mehrdimensionalen Datenbestands in eine vorgegebene Anzahl n von Unterräumen,
2. Einlesen der Daten des ersten Unterraums des UB-Baums in einen Arbeitsspeicher,
3. regionenweises Abarbeiten (Sortieren und/oder Bereitstellen) der Daten des Unterraums,
4. Löschen derjenigen Regionen im Arbeitsspeicher, die keine Schnittmenge mit nachfolgenden Unterräumen aufweisen,
5. Zwischenspeichern derjenigen Regionen in einem Cache-Speicher, die mit mindestens einem der nachfolgenden Unterräume eine Schnittmenge aufweisen (Sprungregionen),
6. Einlesen des nächsten Unterraums des Datenbestands in den Arbeitsspeicher,
7. Wiederholen der Verfahrensschritte 3. bis 6. solange, bis der letzte Unterraum abgearbeitet ist, wobei bei jedem neuen Unterraum zunächst die im Cache-Speicher zwischengespeicherten Sprungregionen abgearbeitet und, falls sie nicht noch weitere Unterräume schneiden, gelöscht werden.

**10.** Verfahren nach Anspruch 8, bei dem zum Durchführen einer Verbundoperation zwischen mindestens zwei Verbundpartnern, wovon mindestens ein Verbundpartner der als UB-Baum abgespeicherte mehrdimensionale Datenbestand ist, die folgenden Schritte vorgesehen sind:

1. Unterteilen der Verbundpartner in n Unterräume,
2a. Einlesen der Daten des ersten Unterraums eines ersten Verbundpartners in einen Arbeitsspeicher, 2b. Einlesen der Daten der ersten Region des ersten Unterraums eines zweiten, als UB-Baum abgespeicherten Verbundpartners,
3. Abarbeiten (Finden und Zuordnen) der im Arbeitsspeicher befindlichen Daten der Verbundpartner,
4. Löschen der Region im Arbeitsspeicher, falls diese keine Schnittmenge mit mindestens einem der nachfolgenden Unterräume des UB-Baums aufweist, anderenfalls Zwischenspeichern der Region (Sprungregion) in einem Cache-Speicher,
5. Einlesen der nächsten Region des zweiten Verbundpartners in den Arbeitsspeicher,
6. Wiederholen der Verfahrenschritte 3. bis 5. solange, bis die letzte Region des ersten Unterraums des zweiten Verbundpartners abgearbeitet ist,
7. Einlesen des nächsten Unterraums des ersten Verbundpartners und regionenweises Einlesen des nächsten Unterraums des zweiten Verbundpartners,
8. Wiederholen der Verfahrenschritte 3. bis 7. solange, bis der letzte Unterraum abgearbeitet ist, wobei bei jedem neuen Unterraum zunächst die im Cache-Speicher zwischengespeicherten Sprungregionen abgearbeitet und, falls sie nicht noch weitere Unterräume schneiden, gelöscht werden.

**11.** Verfahren nach Anspruch 9 oder 10, bei dem mindestens der Anteil einer Sprungregion in dem Cache-Speicher gespeichert wird, der noch nicht abgearbeitet ist.

**12.** Verfahren nach einem der Ansprüche 8 bis 11, bei dem die Anzahl n der Unterräume der Bedingung $n = 2^k$ genügt, wobei k die Anzahl der Unterteilungen des UB-BaumDatenbestandes ist.

**13.** Computerprogramm mit Programmcodemitteln, die bei Betrieb des Computerprogramms auf einer dazu geeigneten Recheneinrichtung zur Durchführung eines Verfahrens gemäß einem der Ansprüche 8 bis 12 geeignet sind.

**14.** Computerprogramm nach Anspruch 13, das auf einem computerlesbaren Medium gespeichert ist.

**Claims**

**1.** A database system comprising a computer unit, a main memory and another memory, in particular a peripheral memory storing at least one multi-dimensional stock of data in the form of a UB tree,
characterized in that
to read and ready the stock of data in an arbitrary sorting sequence, the UB tree is sub-divided into a predetermined number of sub-spaces and the sub-spaces are consecutively processed by processing region by region the data of each sub-space, the regions comprising consecutive sub-spaces of the data stock located in a multi-dimensional cube and each region containing a quantity of data objects that can be stored on a memory page of giving storage capacity.

**2.** Database system as claimed in claim 1, characterized in that it comprises a cache storage to buffer UB-tree regions (jump regions) cutting the sub-space being processed until the jump region(s) in the subsequent sub-spaces have been completely processed.

**3.** Database system as claimed in either of claims 1 and 2,
characterized in that a join operation is carried out between the UB tree and at least one further join partner by sub-dividing the join partner into a number of sub-spaces corresponding to the number of UB tree sub-spaces and by consecutively processing the particular sub-spaces while joining partial stocks of data of the join partners.

**4.** Database system as claimed in one of claims 1 through 3, characterized in that the default number and/or the default of sub-spaces width is implemented by a control unit.

**5.** Database system as claimed in claim 4, characterized in that the control unit is part of the computer unit.

**6.** Database system as claimed in one of claims 1 through 5, characterized in that a sub-space width default is a minimizing function of the storing capacity of the cache storage.

**7.** Database system as claimed in one of claims 1 through 6, characterized in that the sub-division is implemented into sub-spaces of identical widths.

**8.** A method for running a database system, in particular as claimed in one of the claims 1 to 7, wherein at least one multi-dimensional stock of data is stored in an in particular peripheral memory in the form of a UB-tree, characterized in that to read and ready the stock of data in a arbitrary sorting sequence, the UB-tree is subdivided into a predetermined number of sub-spaces and the sub-spaces are consecutively processed by processing region by region the data of each sub-space, the regions comprising consecutive sub-spaces of the data stock located in a multi-dimensional cube and each region containing a quantity of data objects that can be stored on a memory page of given storage capacity.

**9.** A method as claimed in claim 8, wherein the following steps take place to read data in an arbitrary sorting sequence:

1. sub-dividing a multi-dimensional stock of data stored in the form of a UB tree into a predetermined number of n sub-spaces,
2. feeding the data from the first sub-space of the UB tree into a main memory,
3. processing by region (sorting and/or readying) the data of the sub-space,
4. erasing those regions in the main memory lacking any cut sets with subsequent sub-spaces,
5. buffering those regions in a cache storage which comprise a cut set with at least one of the ensuing sub-spaces (jump regions),
6. feeding the next sub-space of the stock of data into the main memory,
7. repeating the method steps 3 through 6 until the last sub-space has been processed, where, as regards each new sub-space first the jump regions buffered in the cache storage are processed and will be erased in case they do not cut further sub-spaces.

**10.** A method as claimed in claim 8, wherein the following steps take place to implement a join operation between at least two join partners, at least one join partner being a multi-dimensional stock of data stored as a UB tree:

1. sub-dividing the join partners into n sub-spaces,
2a. feeding the data from the first sub-space in a first join partner into a main memory,
2b. input of the data from the first region of the first sub-space of a second join partner stored in the form of a UB tree,
3. process (find and assign) the join partner data in the main memory,
4. erase the region in the main memory in case this region lacks a cut set in the main memory with at least one of the following sub-spaces of the UB tree, otherwise buffer the region (jump region) in a cache storage,
5. feed the next region of the second join partner into the main memory,
6. repeat method steps 3 through 5 until the last region of the first sub-space of the second join partner has been processed,
7. input of the next sub-space of the first join partner, and region by region input of the next sub-space of the second join partner,
8. repeat the method steps 3 through 7 until the last sub-space has been processed, where, for each new sub-space, first the jump regions buffered in the cache storage are processed and, in case they do not cut further sub-spaces, they will be erased.

**11.** Method as claimed in either of the claims 9 or 10, wherein at least that portion of a jump region which has not yet been processed is stored in the cache storage.

**12.** Method as claimed in one of the claims 8 through 11, wherein the number n of the sub-spaces obeys the condition $n = 2^k$, where k is the number of sub-divisions of the UB tree's stock of data.

**13.** Computer program comprising program code means able to perform a method according to one of the claims 8 to 12 when run on a suitable computing device.

**14.** Computer program according to claim 13, which is stored on a computer readable medium.

**Revendications**

**1.** Système de banque de données avec un dispositif de calcul, une mémoire de travail et avec un dispositif de mémorisation en particulier périphérique dans lequel au moins un stock de données multidimensionnel est mémorisé comme arbre UB, caractérisé par le fait que, pour la lecture et la mise à la disposition du stock de données dans un ordre de tri quelconque, l'arbre UB est subdivisé en un nombre donné de sous-espaces et les sous-espaces sont traités successivement par un traitement par régions des données de chaque sous-espace, les régions réunissant des sous-cubes successifs du stock de données situé dans un cube multidimensionnel et comprenant respectivement une quantité d'objets de données qui peuvent être mémorisés sur une page de mémoire d'une capacité donnée de mémoire.

**2.** Système de banque de données selon la revendication 1, caractérisé par le fait qu'une mémoire cache est prévue pour la mémorisation temporaire de régions (régions de saut) de l'arbre UB, qui coupent le sous-espace en traitement, jusqu'au traitement complet effectué de la région de saut ou des régions de saut dans des sous-espaces suivants.

**3.** Système de banque de données selon la revendication 1 ou 2, caractérisé par le fait qu'une opération de jonction est effectuée entre l'arbre UB et a moins un autre partenaire de jonction en subdivisant le partenaire de jonction en un nombre de sous-espaces correspondant au nombre des sous-espaces de l'arbre UB et en traitant successivement les sous-espaces respectifs en reliant des stocks partiels de données des partenaires de jonction.

**4.** Système de banque de données selon l'une des revendications 1 à 3, caractérisé par le fait que le nombre et/ou la largeur des sous-espaces est ou bien sont prédéfini(s) par un dispositif de commande.

**5.** Système de banque de données selon la revendication 4, caractérisé par le fait que ledit dispositif de commande fait partie du dispositif de calcul.

**6.** Système de banque de données selon l'une des revendications 1 à 5, caractérisé par le fait qu'il y a une prédéfinition de la largeur des sous-espaces en tant que fonction de minimalisation de la capacité de mémoire de la mémoire cache.

**7.** Système de banque de données selon l'une des revendications 1 à 6, caractérisé par le fait que la subdivision est effectuée en sous-espaces de largeur égale.

**8.** Procédé d'opération d'un système de banque de données, en particulier selon l'une des revendications 1 à 7, dans lequel au moins un stock de données multidimensionnel est mémorisé comme arbre UB dans un dispositif de mémorisation en particulier périphérique, caractérisé par le fait que, pour la lecture et la mise à la disposition du stock de données dans un ordre de tri quelconque, l'arbre UB est subdivisé en un nombre donné de sous-espaces et les sous-espaces sont traités successivement par un traitement par régions des données de chaque sous-espace, les régions réunissant des sous-cubes successifs du stock de données situé dans un cube multidimensionnel et comprenant respectivement une quantité d'objets de données qui peuvent être mémorisés sur une page de mémoire d'une capacité donnée de mémoire.

**9.** Procédé selon la revendication 8, dans lequel, pour la lecture de données dans un ordre de tri quelconque, on prévoit les étapes suivantes:

1. Subdivision d'un stock de données multidimensionnel mémorisé comme arbre UB en un nombre n donné de sous-espaces,
2. Mémorisation des données du premier sous-espace de l'arbre UB dans une mémoire de travail,
3. Traitement par régions (tri et/ou mise à la disposition) des données du sous-espace,
4. Effacement de celles des régions dans la mémoire de travail, qui ne présentent pas d'intersection d'ensemble avec des sous-espaces suivants,
5. Mémorisation temporaire de celles des régions dans une mémoire cache, qui présentent une intersection d'ensemble avec au moins un des sous-espaces suivants (régions de saut),
6. Mémorisation du sous-espace suivant du stock de données dans la mémoire de travail,
7. Répétition des étapes 3 à 6 du procédé jusqu'à ce que le dernier sous-espace soit traité; dans chaque nouveau sous-espace, d'abord les régions de saut mémorisées temporairement dans la mémoire cache étant traitées et, si elles ne coupent pas encore d'autres sous-espaces, effacées.

**10.** Procédé selon la revendication 8, dans lequel, pour la mise en oeuvre d'une opération de jonction entre au moins deux partenaires de jonction, dont au moins un partenaire de jonction est le stock de données multidimensionnel mémorisé comme arbre UB, on prévoit les étapes suivantes:

1. Subdivision des partenaires de jonction en n sous-espaces,
2a. Mémorisation des données du premier sous-espace d'un premier partenaire de jonction dans une mémoire de travail,
2b. Mémorisation des données de la première région du premier sous-espace d'un deuxième partenaire de jonction mémorisé comme arbre UB,
3. Traitement (trouver et associer) des données des partenaires de jonction, qui se trouvent dans la mémoire de travail,
4. Effacement de la région dans la mémoire de travail, si celle-ci ne présente pas d'intersection d'ensemble avec au moins un des sous-espaces suivants de l'arbre UB, sinon, mémorisation temporaire de la région (région de saut) dans une mémoire cache,
5. Mémorisation de la région suivante du deuxième partenaire de jonction dans la mémoire de travail,
6. Répétition des étapes 3 à 5 du procédé jusqu'à ce que la dernière région du premier sous-espace du deuxième partenaire de jonction soit traitée,
7. Mémorisation du sous-espace suivant du premier partenaire de jonction et mémorisation par régions du sous-espace suivant du deuxième partenaire de jonction,
8. Répétition des étapes 3 à 7 du procédé jusqu'à ce que le dernier sous-espace soit traité; dans chaque nouveau sous-espace, d'abord les régions de saut mémorisées temporairement dans la mémoire cache étant traitées et, si elles ne coupent pas encore d'autres sous-espaces, effacées.

**11.** Procédé selon la revendication 9 ou 10, dans lequel au moins la partie d'une région de saut qui n'est pas encore traitée est mémorisée dans la mémoire cache.

**12.** Procédé selon l'une des revendications 8 à 11, dans lequel le nombre n des sous-espaces satisfait à la condition $n = 2^k$, où k est le nombre des subdivisions du stock de données mémorisé comme arbre UB.

**13.** Programme d'ordinateur avec des moyens de code de programme qui, lors de l'exploitation du programme d'ordinateur sur un dispositif approprié de calcul, se prêtent à la mise en oeuvre d'un procédé selon l'une des revendications 8 à 12.

**14.** Programme d'ordinateur selon la revendication 13, qui est mémorisé sur un support lisible par ordinateur.

FIG 1a

FIG 1b

FIG 1c

FIG. 2

FIG. 3